# EUROPEAN PATENT APPLICATION

(11) **EP 4 005 391 A1**
(43) Date of publication of application: **01.06.2022**
(21) Application number: 21157994.1
(22) Date of filing: 18.02.2021
(51) Int. Cl.: A21D 13/48, A23P 30/10, A47G 21/00

(54) **PRODUCTION METHOD OF EDIBLE BIODEGRADABLE TABLEWARE**

(30) Priority: 25.11.2020 TW 109141245
(71) Applicant: Kong, Zhi-Cong, Foshan City, Guangdong (CN); Liu, Zi-Meng, Hebei City, Qinhuangdao Province (CN); Wu, Feng-Yu, Nantou City, Nantou County 54061 (TW); Hsiao, Ya-Ying, Ji'an Township, Hualien County 97345 (TW)
(72) Inventor: Kong, Zhi-Cong, Foshan City, Guangdong (CN); Liu, Zi-Meng, Hebei City, Qinhuangdao Province (CN); Wu, Feng-Yu, Nantou City, Nantou County 54061 (TW); Hsiao, Ya-Ying, Ji'an Township, Hualien County 97345 (TW)
(74) Representative: Lang, Christian

(57) **Abstract**

A production method of edible biodegradable tableware uses a powder mixture to manufacture an edible biodegradable product by a manufacturing process, and the powder mixture includes a dry powder and a maltose, and the maltose is prepared according to the total weight of the dry powder in a ratio of 1:10∼100, and the production method has the effects of improving product stability, simplifying production process, increasing yield and efficiency, avoiding pollutions during production, and decomposing the used product in various environments.

## Description

### BACKGROUND OF THE INVENTION

### Technical Field

The present invention relates to a production method of tableware, and more particularly to the production method of edible biodegradable tableware.

### Description of the Related Art

To save the cost of tableware, caterers or consumers usually choose to buy single-use disposable tableware which is usually made of a plastic or paper material. Compared with the tableware that can be washed and used repeatedly, although the disposable tableware has the effects of saving the cleaning of the tableware and reducing the purchase cost, yet the material used for manufacturing the disposable tableware cannot be biodegraded, and the disposable tableware cannot be decomposed, and thus causing the accumulation of garbage. If the garbage formed by the used disposable tableware is disposed by an incineration or burying method, it will cause a serious environmental pollution, and the difficult recycle of the disposable tableware will lead to serious problems of ecological damage and overflowing garbage.

At present, 300 million tons of plastic are produced globally every year, of which 50% of plastic is single-use, and the poor downstream processing of single-use plastic causes 8.3 million tons of plastic to flow into the ocean, and 50% of marine garbage is the single-use plastic. Statistics shows that the waste plastic tableware is one of the top 10 marine plastic garbage, and a large number of plastic particles are floating in the ocean and causing marine organisms to eat the plastic by mistake. For example, 120,000 to 140,000 tons of plastic are eaten by fishes by mistake in North Pacific Ocean every year. According to the current trend of accumulated marine plastic garbage, scientists predict that the total weight of marine plastic garbage in the ocean will be greater than that of the fish by 2050.

Bio-based plastic is mainly the current alternative for petroleum-based plastic, and the most representative bio-based plastic is polylactic acid (PLA), but fully-degradable bio-based plastics mainly include polyhydroxybutyrate (PHB), and tertbutyldimethylsilyl (TBS) in form of a thin film and the conversation rate of organic chemical substances is not high. In addition, bamboo/wood/palm fiber products are used, but a large amount of polluted waste water is produced in the upstream processing, and the automation rate and the product manufacturing rate are also problems. At present, there is no tableware that can be degraded in various environments including the wild environment, nor single-use tableware produced by a pollution-free production process.

### SUMMARY OF THE INVENTION

Therefore, it is a primary objective of the present invention to overcome the aforementioned drawbacks of the prior art by providing a production method of edible biodegradable tableware that uses a powder mixture to manufacture an edible biodegradable product by a manufacturing process, and the powder mixture comprises a dry powder and a maltose, and the dry powder comprises: 10 to 30% of wheat flour; 5 to 30% of corn flour; 20 to 40% of rice flour; 0.01 to 5% of sodium alginate; 0.1 to 6% of vegetable oil; 0.01 to 2% of guar gum; 0.5 to 3% of salt; 0.5 to 5% of trehalose; 0.1 to 3% of calcium chloride; and 0.1 to 50% of grains powder; wherein the maltose is prepared according to the total weight of the dry powder in a ratio of 1:10∼100.

The primary objective of the present invention is to achieve the effects of improving product stability, simplifying production process, increasing yield and efficiency, avoiding pollutions during production, and decomposing the used product in various environments.

### BRIEF DESCRIPTION OF THE DRAWINGS

FIG. 1 is a block diagram of a manufacturing process of the present invention;
FIG. 2 is a schematic view showing the stirring extrusion molding steps of a manufacturing process of the present invention;
FIG. 3 is a schematic view showing the calendering roll cutting steps of a manufacturing process of the present invention;
FIG. 4 is a schematic view showing the step of placing a mold in a manufacturing process of the present invention;
FIG. 5 is a schematic view of the drying treatment step in a manufacturing process of the present invention;
FIG. 6 is a schematic view of taking out a product in a manufacturing process of the present invention;
FIG. 7 is a block diagram of another manufacturing process of the present invention;
FIG. 8 is a block diagram of a further manufacturing process of the present invention; and
FIG. 9 is a block diagram of another further manufacturing process of the present invention.

### DESCRIPTION OF THE PREFERRED EMBODIMENTS

The present invention will become clearer in light of the following detailed description of illustrative embodiments of this invention described in connection with the related drawings.

The present invention is directed to a production method of edible biodegradable tableware that uses a powder mixture to manufacture an edible biodegradable product, and the powder mixture comprises a dry powder and a maltose, and the dry powder comprises: 20 to 80% of rice flour; 10 to 50% of grains powder; 0.1 to 20% of konjac powder; 0.01 to 5% of sodium alginate; 0.5 to 4% of salt; 0.5 to 5% of trehalose; 0.1 to 5% of calcium chloride; 0.1 to 5% of carrageenan; and 0.1 to 5% of edible alkali; wherein, the maltose is prepared according to the total weight of the dry powder in a ratio of 1:10∼100.

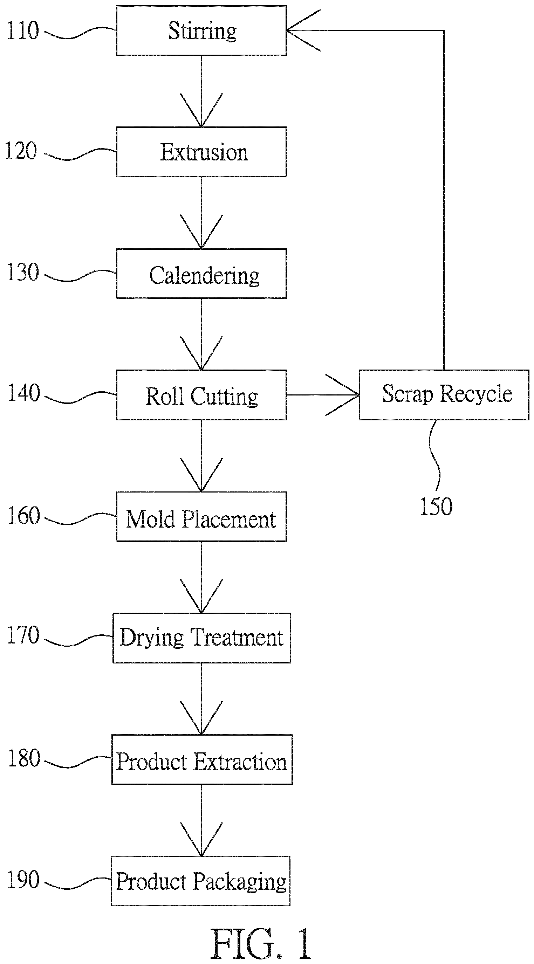

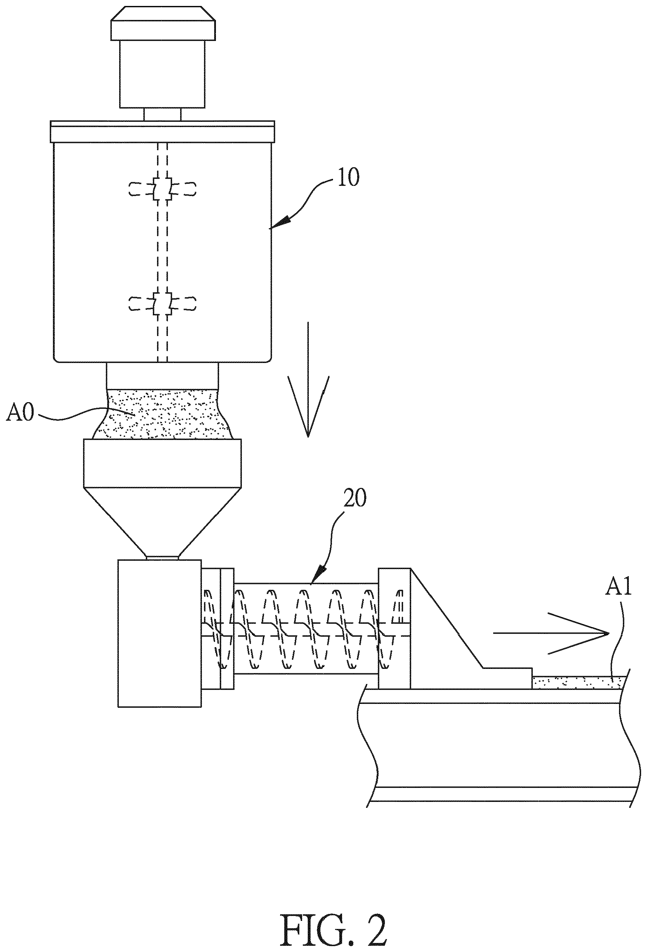

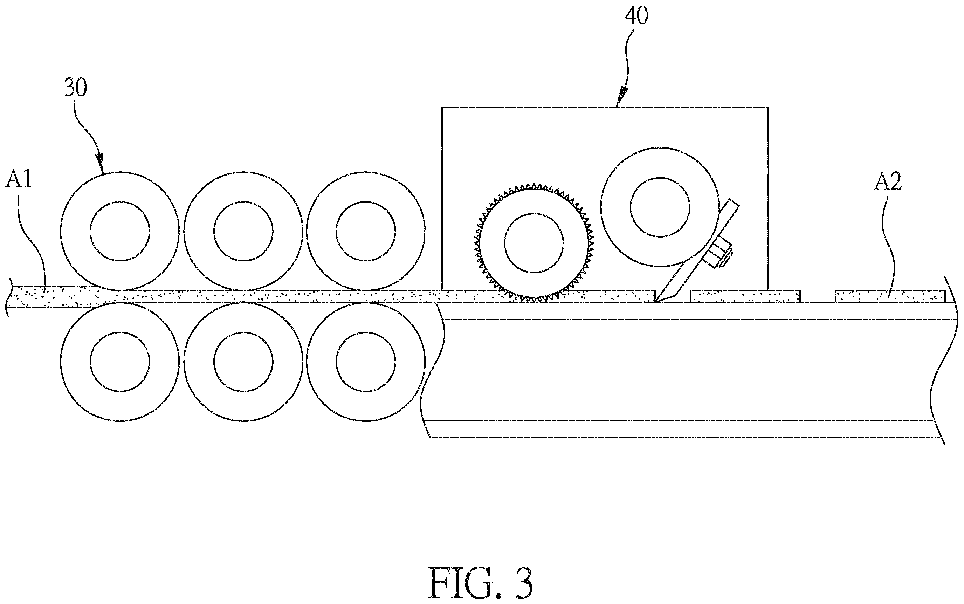

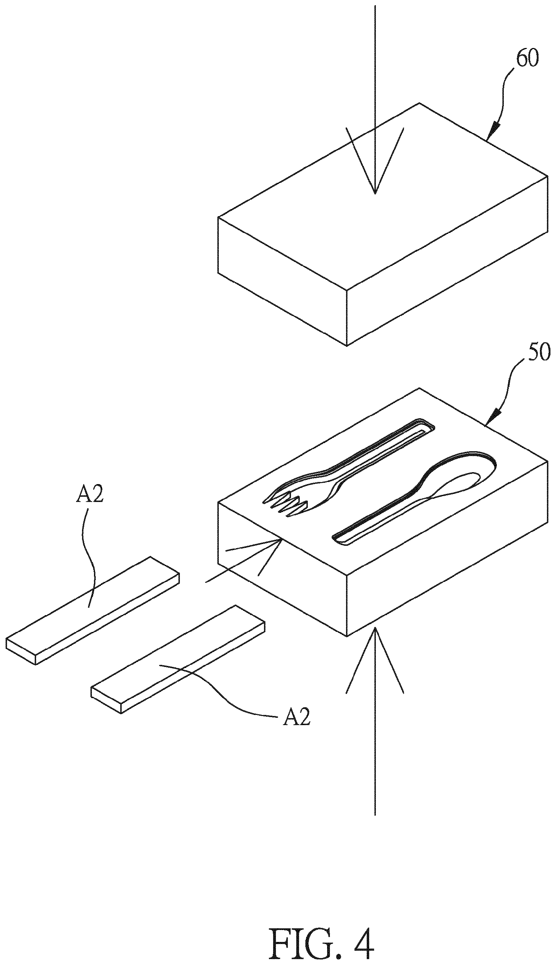

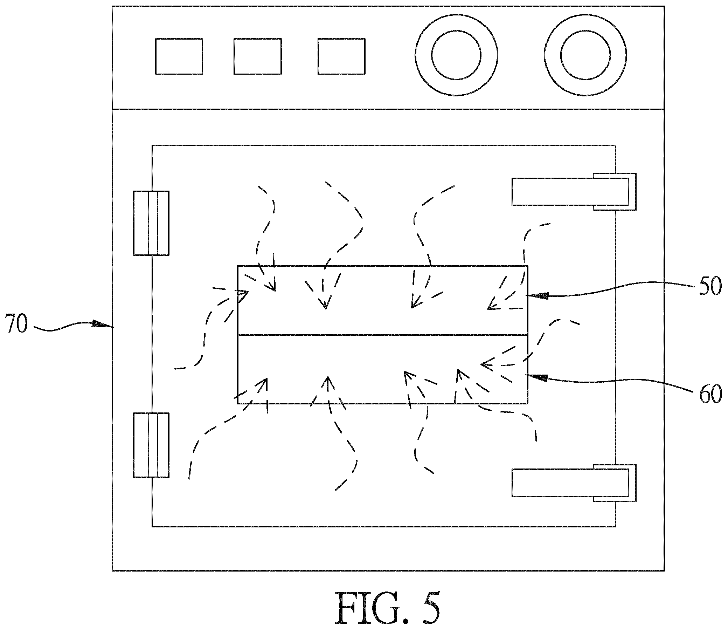

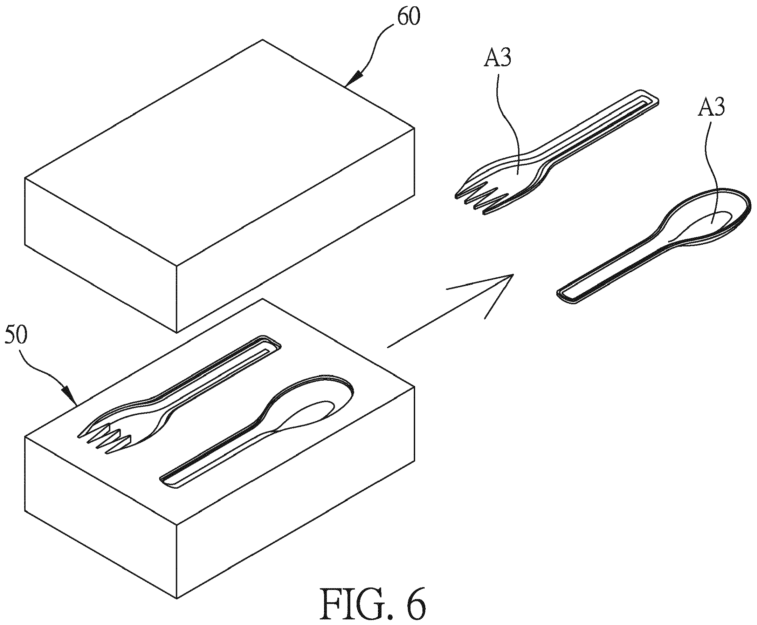

With reference to FIGS. 1 to 6 for a manufacturing process of the present invention, the manufacturing process comprises the following steps:
(a) Stirring Step 110: Put the powder mixture A0 into a blender 10 and stirring the powder mixture A0.
(b) Extrusion Step 120: Put the stirred powder mixture A0 into an extruder 20, adding water to increase the water content of the powder mixture to 20∼50%, heating up to 50∼200°C to perform an extrusion, and extrude the powder mixture A0 in a continuous tubular form from the extruder 20, and then cut the powder mixture A0 into a flat sheet A1 with a thickness of 1∼4mm.
(c) Calendering Step 130: Calender the sheet A1 by a calender machine 30 until the calendered sheet A1 has a thickness of 1∼4mm.
(d) Roll Cutting Step 140: Cut the calendered sheet A1 by a roll cutting machine 40 into a blank A2 with specified length and width.
(e) Scrap Recycling Step 150: Recycle a scrap remained in the roll cutting step 140 into the blender 10 of the stirring step 110.
(f) Mold Placement Step 160: Place the blank A2 into a lower mold 50, and clamp the lower mold 50 with an upper mold 60, so that the blank A2 is clamped between the lower mold 50 and the upper mold 60.
(g) Drying Treatment Step 170: Send the clamped upper mold 60 and lower mold 50 into a drying line 70, and carrying out a drying treatment at 65∼150°C for 1 to 8 hours to form a product A3 (such as a knife, a fork, and a spoon) by the blank A2.
(h) Product Extraction Step 180: Separate the clamped upper mold 60 and lower mold 50, remove the product A3 from the lower mold 50, and put the product A3 into a conveyor line to move the product A3 forward.
(i) Product Packaging Step 190: Pack the product A3 into cartons by batches.

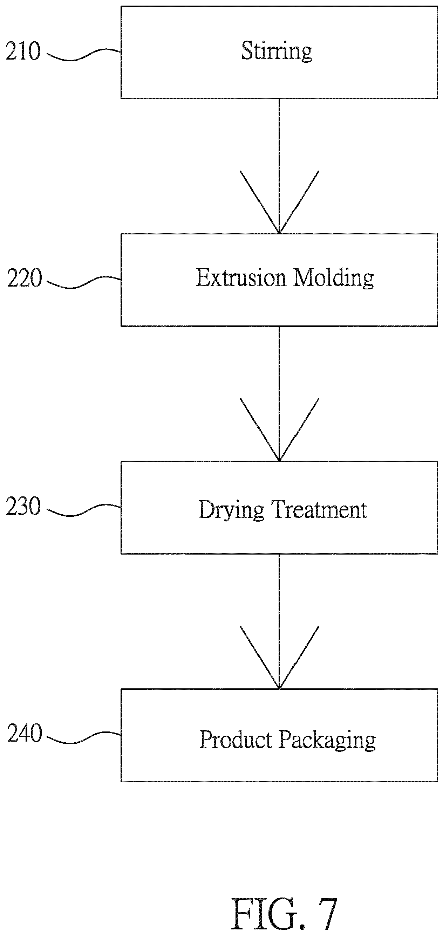

With reference to FIG. 7 for another manufacturing process of the present invention, this manufacturing process comprises the following steps:
(a1) Stirring Step 210: Put a powder mixture into a blender and stir the powder mixture.
(b1) Extrusion Step 220: Put the stirred powder mixture into an extruder, adding water to increase the water content of the powder mixture to 20∼50%, heat up to 50∼200°C to perform an extrusion, and extrude the powder mixture in a continuous cylindrical, tubular, or nail form from the extruder, and then cut the powder mixture into a desired shape of the product with a specified length by a roller cutter, and drop the product into a conveyor line to move the product forward.
(c1) Drying Treatment Step 230: Send the cut material with the specified length into a drying line, and carry out a drying treatment at 65∼150°C for 1 to 8 hours to dry the cut material with the specified length into a product (such as a golf tee, a straw, a chopsticks, a drink stirring rod, etc.)
(d1) Product Packaging Step 240: Arrange and pack the product into a package.

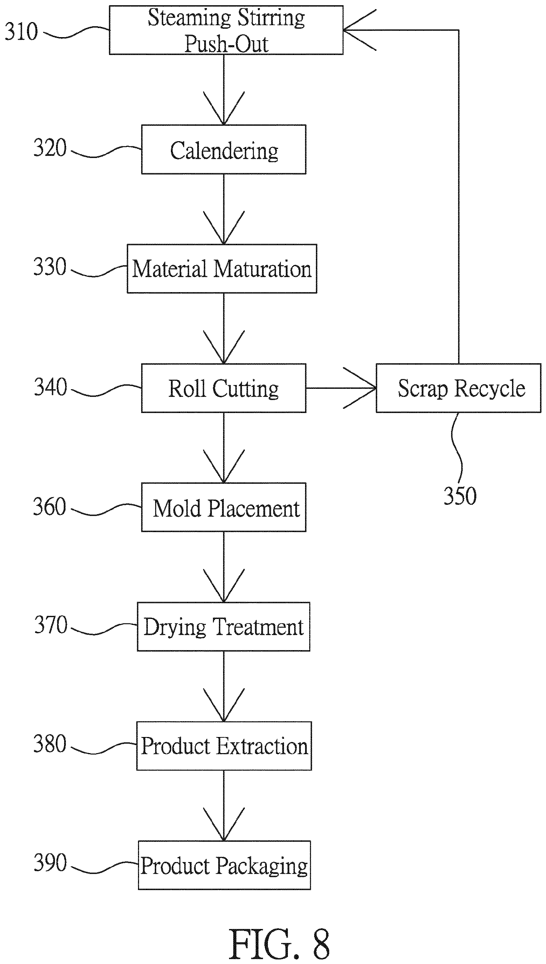

With reference to FIG. 8 for a further manufacturing process of the present invention, this manufacturing process comprises the following steps:
(a2) Steam Stirring Push-Out Step 310: Put the powder mixture into a blender, stir the powder mixture, add steam to stir the powder mixture, and push out the stirred material.
(b2) Calendering Step 320: Send the stirred material with a water content of 20∼50% to a calender machine, and calender the stirred material into a sheet with a thickness of 1∼4mm by a plurality of calender machines.
(c2) Material Maturation Step 330: Refrigerate (age) the calendered sheet material in order to mature the sheet material.
(d2) Roll Cutting Step 340: Cut the matured sheet material into a blank with specified length and width by a roll cutting machine, and cut out the remaining scrap.
(e2) Scrap Recycling Step 350: Recycle the cut remaining scrap into the blender of the steam stirring push-out step 310.
(f2) Mold Placement Step 360: Put the blank into a lower mold, and then clamp the lower mold with an upper mold, so that the blank is clamped between the lower mold and the upper mold.
(g2) Drying Treatment Step 370: Send the clamped upper mold and lower mold and the scrap into a drying line, and carry out a drying treatment at 65∼150°C for 1 to 8 hours to form a product (such as a knife, a fork, a spoon, and a drink stirring rod) by the blank.
(h2) Product Extraction Step 380: Separate the clamped upper mold and lower mold, remove the product from the lower mold, and put the product into a conveyor line to move the product forward.
(i2) Product Packaging Step 390: Pack the product into cartons by batches.

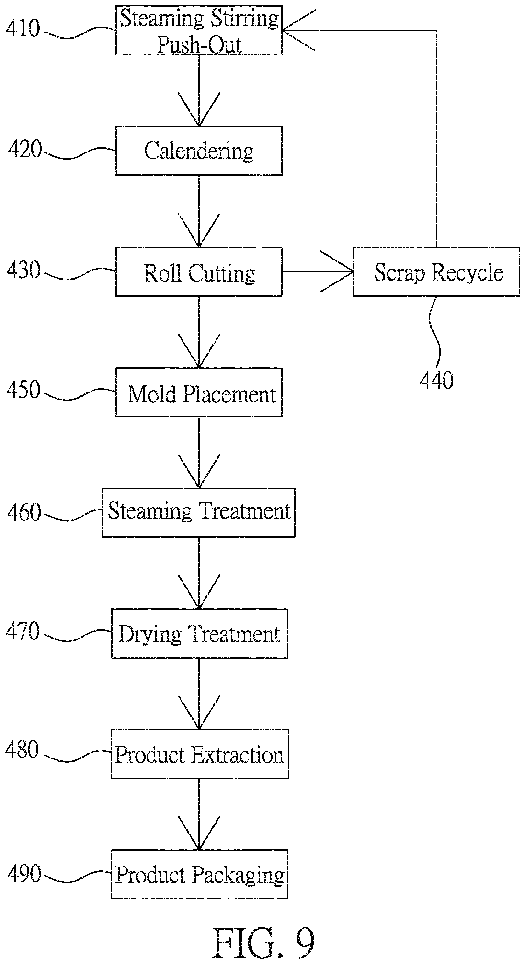

With reference to FIG. 9 for another further manufacturing process of the present invention, this manufacturing process comprises the following steps:
(a3) Stirring Push-Out Step 410: Put the powder mixture into a blender, stir the powder mixture, add water (at a water temperature <35°C), and push out the stirred material.
(b3) Calendering Step 420: Send the material with a water content of 20∼50% into a calender machine, and calender the material into a flat sheet with a thickness 1∼4mm of by a plurality of calendering devices.
(c3) Roll Cutting Step 430: Cut the calendered sheet material by a roll cutting machine into a blank with specified length and width.
(d3) Scrap Recycling Step 440: Recycle a scrap remained in the roll cutting step into the blender of the stirring push-out step 410.
(e3) Mold Placement Step 450: Place the blank into a lower mold, and clamp the lower mold with an upper mold, so that the blank is clamped between the lower mold and the upper mold.
(f3) Steaming Treatment Step 460: Send the clamped upper mold and lower mold into a steaming line, and carry out a steaming treatment at 90∼100°C for 1 to 10 minutes.
(g3) Drying Treatment Step 470: Send the clamped upper mold and lower mold into a drying line, and carry out a drying treatment at 65∼150°C for 1 to 8 hours to form a product (such as a knife, a fork, and a spoon) by the blank.
(h3) Product Extraction Step 480: Separate the clamped upper mold and lower mold, remove the product from the lower mold, and put the product into a conveyor line to move the product forward.
(i3) Product Packaging Step 490: Pack the product into cartons in batches.

The dry powder of the powder mixture may comprise: 10 to 30% of wheat flour; 5 to 30% of corn flour; 20 to 40% of rice flour; 0.01 to 5% of sodium alginate; 0.1 to 6% of vegetable oil; 0.01 to 2% of guar gum; 0.5 to 3% of salt; 0.5 to 5% of trehalose; 0.1 to 3% of calcium chloride; and 0.1 to 50% of grains powder.

The structure of the exemplary embodiments of the present invention has the following beneficial effects:
1. The production method of edible biodegradable tableware of the present invention can improve product stability, simplify process, increase yield and efficiency, avoid pollutions during production, and decompose the used product in various environments.
2. The production method of edible biodegradable tableware of the present invention can reduce the thickness (1.0∼4.0mm) of the mass produced product with better stability, while ensuring the degree of gelatinization of all mass produced products, slowing down the shrinkage rate of the products (<10%), and improving the quality of the products.

While various embodiments in accordance with the present invention have been shown and described, it is clear to those skilled in the art that further embodiments may be made without departing from the scope of the present invention.

## Claims

1. A production method of edible biodegradable tableware, using a powder mixture to manufacture an edible biodegradable product by a manufacturing process, and the powder mixture comprising a dry powder and a maltose, and the dry powder comprising:
20 to 80% of rice flour;
10 to 50% of grains powder;
0,1 to 20% of konjac powder;
0,01 to 5% of sodium alginate;
0,5 to 4% of salt;
0,5 to 5% of trehalose;
0,1 to 5% of calcium chloride;
0,1 to 5% of carrageenan; and
0,1 to 5% of edible alkali;
wherein the maltose is prepared according to the total weight of the dry powder total weight in a ratio of 1:10∼100.

2. The production method of edible biodegradable tableware as claimed in claim 1, wherein the manufacturing process comprises the following steps:
(a) Stirring Step: Putting the powder mixture into a blender and stirring the powder mixture;
(b) Extrusion Step: Putting the stirred powder mixture into an extruder, adding water to increase the water content of the powder mixture to 20∼50%, heating up to 50∼200°C to perform an extrusion, and extruding the powder mixture in a continuous tubular form from the extruder, and then cutting the powder mixture into a flat sheet with a thickness of 1∼4mm;
(c) Calendering Step: Calendering the sheet material by a calender machine until the calendered sheet material has a thickness of 1∼4mm;
(d) Roll Cutting Step: Cutting the calendered sheet material by a roll cutting machine into a blank with specified length and width;
(e) Scrap Recycling Step: Recycling a scrap remained in the roll cutting step into the blender of the stirring step;
(f) Mold Placement Step: Placing the blank into a lower mold, and clamping the lower mold with an upper mold, so that the blank is clamped between the lower mold and the upper mold;
(g) Drying Treatment Step: Sending the clamped upper mold and lower mold into a drying line, and carrying out a drying treatment at 65∼150°C for 1 to 8 hours to form a product by the blank;
(h) Product Extraction Step: Separating the clamped upper mold and lower mold, removing the product from the lower mold, and putting the product into a conveyor line to move the product forward; and
(i) Product Packaging Step: Packing the product into cartons by batches.

3. The production method of edible biodegradable tableware as claimed in claim 1, wherein the manufacturing process comprises the steps:
(a1) Stirring Step: Putting the powder mixture into a blender and stirring the powder mixture;
(b1) Extrusion Step: Putting the stirred powder mixture into an extruder, adding water to increase the water content of the powder mixture to 20∼50%, heating up to 50∼200°C to perform an extrusion, extruding the powder mixture in a continuous cylindrical, tubular, or nail form from the extruder, and then cutting the powder mixture into a desired shape of the product with a specified length by a roller cutter, and dropping the product into a conveyor line to move the product forward;
(c1) Drying Treatment Step: Sending the cut material with the specified length into a drying line, and carrying out a drying treatment at 65∼150°C for 1 to 8 hours to dry the cut material with the specified length into a product; and
(d1) Product Packaging Step: Arranging and packing the product into a package.

4. The production method of edible biodegradable tableware as claimed in claim 1, wherein the manufacturing process comprises the steps of:
(a2) Steam Stirring Push-Out Step: Putting the powder mixture into a blender and stirring the powder mixture, and adding steam to stir the powder mixture and pushing out the stirred material;
(b2) Calendering Step: Sending the stirred material with a water content of 20∼50% to a calender machine, calendering the stirred material into a sheet with a thickness of 1∼4mm by a plurality of calender machines;
(c2) Material Maturation Step: Refrigerating (ageing) the calendered sheet material to perform a maturation;
(d2) Roll Cutting Step: Cutting the matured sheet material into a blank with specified length and width by a roll cutting machine, and cutting out the remaining scrap;
(e2) Scrap Recycling Step: Recycling the cut remaining scrap into the blender of the steam stirring push-out step;
(f2) Mold Placement Step: Putting the blank into a lower mold, and then clamping the lower mold with an upper mold, so that the blank is clamped between the lower mold and the upper mold;
(g2) Drying Treatment Step: Sending the clamped upper mold and lower mold and the scrap into a drying line, and carrying out a drying treatment at 65∼150°C for 1 to 8 hours to form a product by the blank;
(h2) Product Extraction Step: Separating the clamped upper mold and lower mold, removing the product from the lower mold, and putting the product into a conveyor line to move the product forward; and
(i2) Product Packaging Step: Packing the product into cartons by batches.

5. The production method of edible biodegradable tableware as claimed in claim 1, wherein the manufacturing process comprises the steps of:
(a3) Stirring Push-Out Step: Putting the powder mixture into a blender, stirring the powder mixture, adding water (at a water temperature <35°C), and pushing out the stirred material;
(b3) Calendering Step: Sending the material with a water content of 20∼50% into a calender machine, calendering the material into a flat sheet with a thickness 1∼4mm of by a plurality of calendering devices;
(c3) Roll Cutting Step: Cutting the calendered sheet material by a roll cutting machine into a blank with specified length and width;
(d3) Scrap Recycling Step: Recycling a scrap remained in the roll cutting step into the blender of the stirring push-out step;
(e3) Mold Placement Step: Placing the blank into a lower mold, and clamping the lower mold with an upper mold, so that the blank is clamped between the lower mold and the upper mold;
(f3) Steaming Treatment Step: Sending the clamped upper mold and lower mold into a steaming line, and carrying out a steaming treatment at 90∼100°C for 1 to 10 minutes;
(g3) Drying Treatment Step: Sending the clamped upper mold and lower mold into a drying line, and carrying out a drying treatment at 65∼150°C for 1 to 8 hours to form a product by the blank; and
(h3) Product Extraction Step: Separating the clamped upper mold and lower mold, removing the product from the lower mold, and putting the product into a conveyor line to move the product forward.

6. A production method of edible biodegradable tableware, using a powder mixture to manufacture an edible biodegradable product by a manufacturing process, and the powder mixture comprising a dry powder and a maltose, and the dry powder comprising:
10 to 30% of wheat flour;
5 to 30% of corn flour;
20 to 40% of rice flour;
0,01 to 5% of sodium alginate;
0,1 to 6% of vegetable oil;
0,01 to 2% of guar gum;
0,5 to 3% of salt;
0,5 to 5% of trehalose;
0,1 to 3% of calcium chloride; and
0,1 to 50% of grains powder;
wherein the maltose is prepared according to the total weight of the dry powder total weight in a ratio of 1:10∼100.

7. The production method of edible biodegradable tableware as claimed in claim 6, wherein the manufacturing process comprises the following steps:
(a) Stirring Step: Putting the powder mixture into a blender and stirring the powder mixture;
(b) Extrusion Step: Putting the stirred powder mixture into an extruder, adding water to increase the water content of the powder mixture to 20∼50%, heating up to 50∼200°C to perform an extrusion, and extruding the powder mixture in a continuous tubular form from the extruder, and then cutting the powder mixture into a flat sheet with a thickness of 1∼4mm;
(c) Calendering Step: Calendering the sheet material by a calender machine until the calendered sheet material has a thickness of 1∼4mm;
(d) Roll Cutting Step: Cutting the calendered sheet material by a roll cutting machine into a blank with specified length and width;
(e) Scrap Recycling Step: Recycling a scrap remained in the roll cutting step into the blender of the stirring step;
(f) Mold Placement Step: Placing the blank into a lower mold, and clamping the lower mold with an upper mold, so that the blank is clamped between the lower mold and the upper mold;
(g) Drying Treatment Step: Sending the clamped upper mold and lower mold into a drying line, and carrying out a drying treatment at 65∼150°C for 1 to 8 hours to form a product by the blank;
(h) Product Extraction Step: Separating the clamped upper mold and lower mold, removing the product from the lower mold, and putting the product into a conveyor line to move the product forward; and
(i) Product Packaging Step: Packing the product into cartons by batches.

8. The production method of edible biodegradable tableware as claimed in claim 6, wherein the manufacturing process comprises the steps:
(a1) Stirring Step: Putting the powder mixture into a blender and stirring the powder mixture;
(b1) Extrusion Step: Putting the stirred powder mixture into an extruder, adding water to increase the water content of the powder mixture to 20∼50%, heating up to 50∼200°C to perform an extrusion, extruding the powder mixture in a continuous cylindrical, tubular, or nail form from the extruder, and then cutting the powder mixture into a desired shape of the product with a specified length by a roller cutter, and dropping the product into a conveyor line to move the product forward;
(c1) Drying Treatment Step: Sending the cut material with the specified length into a drying line, and carrying out a drying treatment at 65∼150°C for 1 to 8 hours to dry the cut material with the specified length into a product; and
(d1) Product Packaging Step: Arranging and packing the product into a package.

9. The production method of edible biodegradable tableware as claimed in claim 6, wherein the manufacturing process comprises the steps of:
(a2) Steam Stirring Push-Out Step: Putting the powder mixture into a blender and stirring the powder mixture, and adding steam to stir the powder mixture and pushing out the stirred material;
(b2) Calendering Step: Sending the stirred material with a water content of 20∼50% to a calender machine, calendering the stirred material into a sheet with a thickness of 1∼4mm by a plurality of calender machines;
(c2) Material Maturation Step: Refrigerating (ageing) the calendered sheet material to perform a maturation;
(d2) Roll Cutting Step: Cutting the matured sheet material into a blank with specified length and width by a roll cutting machine, and cutting out the remaining scrap;
(e2) Scrap Recycling Step: Recycling the cut remaining scrap into the blender of the steam stirring push-out step;
(f2) Mold Placement Step: Putting the blank into a lower mold, and then clamping the lower mold with an upper mold, so that the blank is clamped between the lower mold and the upper mold;
(g2) Drying Treatment Step: Sending the clamped upper mold and lower mold and the scrap into a drying line, and carrying out a drying treatment at 65∼150°C for 1 to 8 hours to form a product by the blank;
(h2) Product Extraction Step: Separating the clamped upper mold and lower mold, removing the product from the lower mold, and putting the product into a conveyor line to move the product forward; and
(i2) Product Packaging Step: Packing the product into cartons by batches.

10. The production method of edible biodegradable tableware as claimed in claim 6, wherein the manufacturing process comprises the steps of:
(a3) Stirring Push-Out Step: Putting the powder mixture into a blender, stirring the powder mixture, adding water (at a water temperature <35°C), and pushing out the stirred material;
(b3) Calendering Step: Sending the material with a water content of 20∼50% into a calender machine, calendering the material into a flat sheet with a thickness 1∼4mm of by a plurality of calendering devices;
(c3) Roll Cutting Step: Cutting the calendered sheet material by a roll cutting machine into a blank with specified length and width;
(d3) Scrap Recycling Step: Recycling a scrap remained in the roll cutting step into the blender of the stirring push-out step;
(e3) Mold Placement Step: Placing the blank into a lower mold, and clamping the lower mold with an upper mold, so that the blank is clamped between the lower mold and the upper mold;
(f3) Steaming Treatment Step: Sending the clamped upper mold and lower mold into a steaming line, and carrying out a steaming treatment at 90∼100°C for 1 to 10 minutes;
(g3) Drying Treatment Step: Sending the clamped upper mold and lower mold into a drying line, and carrying out a drying treatment at 65∼150°C for 1 to 8 hours to form a product by the blank; and
(h3) Product Extraction Step: Separating the clamped upper mold and lower mold, removing the product from the lower mold, and putting the product into a conveyor line to move the product forward.
